# EUROPÄISCHE PATENTANMELDUNG

(11) **EP 2 466 091 A1**
(43) Veröffentlichungstag der Anmeldung: **20.06.2012**
(21) Anmeldenummer: 11009719.3
(22) Anmeldetag: 09.12.2011
(51) Int. Cl.: F02B 37/007, F02B 37/18, F02B 37/22

(54) **Verfahren zum Betreiben eines Kraftwagens mit zwei Turboladern**

(30) Priorität: 18.12.2010 DE 102010055137
(71) Anmelder: Audi AG, 85045 Ingolstadt (DE)
(72) Erfinder: Karcher, Rolf Andreas, 74172 Neckarsulm (DE)

(57) **Zusammenfassung**

Die Erfindung betrifft ein Verfahren zum Betreiben eines Kraftwagens mit zwei Turboladern (16, 18), welchen jeweils eine Gruppe von Zylindern zugeordnet ist, bei welchem für jeden Turbolader (16, 18) eine Temperatur eines Ladeluftstromes in Strömungsrichtung der Ladeluft hinter einem Verdichterrad (30) des jeweiligen Turboladers (16, 18) gemessen wird und eine Differenz der jeweiligen Temperaturen gebildet wird. Ein Unterschied der Temperaturen für die beiden Turbolader (16, 18) zeigt an, dass einer der Turbolader (16, 18) eine gegenüber dem anderen Turbolader (16, 18) erhöhte Drehzahl aufweist. Auf Grundlage dieser Temperaturmessung können daher Maßnahmen ergriffen werden, um Beschädigungen der Turbolader (16, 18) durch eine Drehzahlüberschreitung zuverlässig zu verhindern.

## Beschreibung

Die Erfindung betrifft ein Verfahren zum Betreiben eines Kraftwagens mit zwei Turboladern.

Kraftwagen mit einer Turboladeranordnung, bei welcher jedem Turbolader eine Gruppe von Zylindern, beispielsweise eine einzelne Zylinderbank eines V-Motors, zugeordnet ist, sind aus dem Stand der Technik allgemein bekannt. Jeder der Turbolader versorgt die zugeordnete Zylindergruppe mit verdichteter Ladeluft, das Abgas der jeweiligen Zylindergruppe treibt ein Turbinenrad des zugeordneten Turboladers an. Dies ist auch als parallele Biturboanordnung bekannt. Ebenso bekannt sind Systeme, bei den mehrere Turbolader in ein gemeinsames Volumen fördern, aus dem alle Zylinder versorgt werden.

Die Förderleistung der Turbolader muss in Abhängigkeit von einem Betriebszustand des Motors eingestellt werden. Über ein sogenanntes Wastegate-Ventil lässt sich hierzu ein Teil des Abgasstromes am Turbinenrad des Turboladers vorbeileiten. Durch Variation der vorbeigeleiteten Abgasmenge kann die Drehzahl des Turboladers eingestellt werden. Ferner sind Turbolader mit sogenannter variabler Turbinengeometrie bekannt. Mittels einstellbarer Leitschaufeln am Turbineneintritt kann hier die Strömungsgeschwindigkeit des Abgases variiert und damit die Drehzahl eingestellt werden.

Turbolader sind üblicherweise so ausgelegt, dass im Vollastbetrieb des zugeordneten Motors die Drehzahl des Turboladers etwas unterhalb der maximal zulässigen Drehzahl liegt. In bestimmten Situationen kann sich die Drehzahl des Turboladers unerwünscht erhöhen, beispielsweise bei einem Leck in Strömungsrichtung der Ladeluft hinter dem Turbolader oder bei starkem Ansaugdruckverlust. Bei Systemen mit mehreren Turboladern erhöht sich die Gefahr der Drehzahlüberschreitung, wenn die beiden Turbolader nicht synchron laufen. Tritt eine solche Situation auf, während sich der Motor im Volllastbetrieb befindet, kann die Drehzahl des Turboladers das zulässige Maximum überschreiten, was zur Zerstörung des Turboladers führen kann.

Eine direkte Drehzahlmessung am Turbolader ist zwar möglich, wird aus Kostengründen üblicherweise nicht durchgeführt. Um eine Überschreitung der Maximaldrehzahl durch entsprechende Steuerungseingriffe verhindern zu können, ist daher eine indirekte Messung der Drehzahl des Turboladers nötig. Aus der KR 2004 0037779 ist bekannt, hierzu eine Temperaturdifferenz zwischen einem Verdichtereingang und Verdichterausgang des Turboladers zu messen. Da durch die Verdichtung die Temperatur der Ladeluft erhöht wird und da das Ausmaß der Verdichtung von der Drehzahl des Turboladers abhängt, kann die Temperaturdifferenz als indirektes Maß für die Drehzahl verwendet werden. Überschreitet diese Differenz einen vorgegebenen Wert, so wird ein Warnsignal erzeugt.

Bei Kraftwagen mit zwei Turboladern in paralleler Anordnung sind zur Durchführung eines solchen Verfahren also insgesamt vier Temperatursensoren notwendig. Dies verteuert die Herstellung des Kraftwagens. Das bekannte Verfahren ist ferner mit dem Nachteil behaftet, dass die Temperaturdifferenz zwischen Verdichtereingang und Verdichterausgang nur ein grobes Maß für die Drehzahl darstellt. Neben der Drehzahl wirken noch andere Einflussgrößen auf die Temperaturdifferenz, wie beispielsweise der Umgebungsdruck.

Der vorliegenden Erfindung liegt somit die Aufgabe zugrunde, ein Verfahren der eingangs genannten Art bereitzustellen, welches eine zuverlässige und kostengünstige Überwachung von Turboladern ermöglicht.

Diese Aufgabe wird durch ein Verfahren mit den Merkmalen des Patentanspruchs 1 gelöst.

Bei einem erfindungsgemäßen Verfahren wird in einem Kraftwagen mit zwei Turboladern in paralleler Anordnung für jeden Turbolader eine Temperatur eines Ladeluftstromes in Strömungsrichtung hinter einem Verdichterrad des jeweiligen Turboladers bestimmt und die Differenz zwischen den Temperaturen für beide Turbolader gebildet.

Ein solches Verfahren benötigt lediglich zwei Temperatursensoren und ist daher besonders kostengünstig. Solche Temperatursensoren sind oftmals ohnehin vorhanden, da ihre Messwerte für die Drosselklappensteuerung verwendet werden. Durch den Vergleich der Temperaturen zwischen den beiden Turboladern werden zudem von der Drehzahl unabhängige Einflüsse auf die Ladelufttemperatur eliminiert. Defekte, die die Turboladerdrehzahl beeinflussen, haben meist nur Auswirkungen auf einen der Turbolader. Der zweite Turbolader kann daher als Referenz dienen, so dass eine Temperaturdifferenz zwischen den beiden Turboladern ein zuverlässiger Indikator für eine drohende Drehzahlüberschreitung ist.

Überschreitet ein Betrag der Temperaturdifferenz einen vorgegebenen Schwellenwert, so wird vorzugsweise die Drehzahl desjenigen Turboladers mit der höheren Temperatur reduziert. Hierdurch kann sichergestellt werden, dass die maximale Drehzahl des Turboladers auch bei Defekten im Ladeluftsystem nicht überschritten wird.

Alternativ hierzu ist es auch möglich, die Drehzahl beider Turbolader zu reduzieren, falls ein Betrag der Differenz einen vorgegebenen Schwellenwert überschreitet. Diese Ausführungsform des Verfahrens kann auch in Kraftwagen Anwendung finden, in denen keine separate Ansteuerung der beiden Turbolader möglich ist.

Vorzugsweise wird zur Verminderung der Drehzahl ein Öffnungsgrad eines Wastegateventils des Turboladers erhöht. Dies führt dazu, dass eine höhere Menge an Abgas am Turbolader vorbeigeleitet wird, so dass weniger Abgas auf die Turbine trifft. Die damit einhergehende Verminderung des Ladedrucks und damit der Motorleistung wird in Kauf genommen, um einen sicheren Weiterbetrieb des Turboladers gewährleisten zu können.

In einer weiteren Ausführungsform der Erfindung wird alternativ oder auch zusätzlich zur Verminderung der Drehzahl ein Anströmquerschnitt des Abgases an ein Turbinenrad des Turboladers durch Verstellen wenigstens einer Leitschaufel erhöht. Hierdurch wird eine Geschwindigkeit des anströmenden Abgases reduziert, so dass die Drehzahl des Turboladers vermindert wird.

Vorzugsweise wird ferner ein Warnsignal erzeugt, wenn der Betrag der Differenz den vorgegebenen Schwellenwert überschreitet. Hierdurch kann dem Fahrer des Kraftwagens angezeigt werden, dass kurzfristig eine Wartung notwendig ist. So können Schäden durch einen längeren Weiterbetrieb des Kraftwagens bei Defekten am Ladeluft- oder Abgassystem vermieden werden.

In einer weiteren Ausführungsform der Erfindung wird der vorgegebenen Schwellenwert in Abhängigkeit von wenigstens einem weiteren Betriebsparameter des Kraftwagens gewählt. Hierdurch kann die maximal zulässige Temperaturdifferenz zwischen den Turboladern beispielsweise von der momentanen Motorleistung abhängig gemacht werden. Bei niedrigerer Leistung, bei der kein nennenswertes Risiko einer Drehzahlüberschreitung der Turbolader besteht, kann dann beispielsweise eine größere Temperaturdifferenz zugelassen werden.

Als weiterer Parameter können auch Ansteuerungsgrößen für die beiden Turbolader, wie zum Beispiel eine Stellung der Leitschaufeln, verwendet werden. Beispielsweise kann die gemessenen Temperaturdifferenz mit der Differenz zwischen einem Ist-Wert und einem Soll-Wert einer solchen Ansteuerungsgröße der Turbolader gewichtet werden, um so geringfügige, auch im Normalbetrieb auftretende Temperaturdifferenzen von solchen Temperaturdifferenzen zu unterscheiden, die durch Defekte am Turbolader, am Ladeluftsystem oder dergleichen verursacht werden. So kann beispielsweise bereits bei einer geringen Temperaturdifferenz zwischen den Turboladern ein Fehler erkannt werden, wenn die Differenz zwischen Ist- und Soll-Wert einer Ansteuerungsgröße des Turboladers besonders groß ist. Ebenfalls ein Fehler liegt beispielsweise dann vor, wenn die Differenz zwischen Ist- und Soll-Wert der Ansteuerungsgröße zwar klein ist, aber dennoch eine besonders hohe Temperaturdifferenz vorliegt.

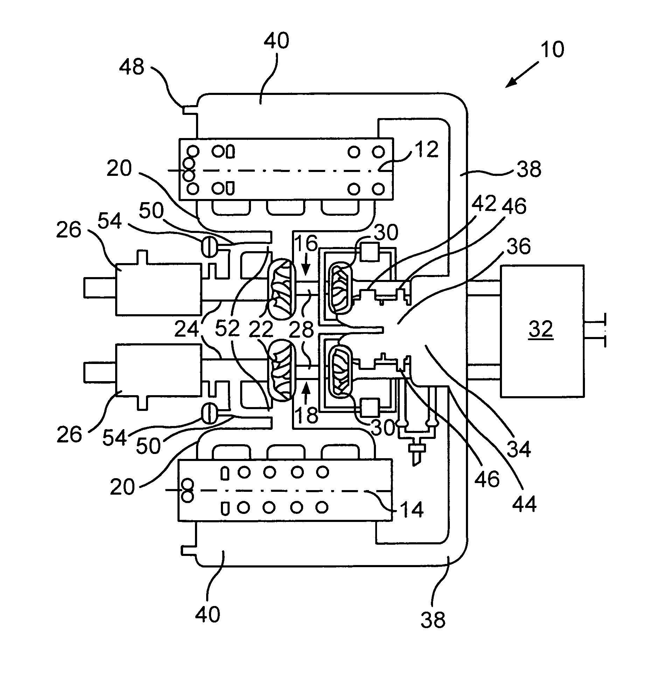

Im Folgenden wird die Erfindung und ihre Ausführungsformen anhand der Zeichnung näher erläutert. Die einzige Figur zeigt eine schematische Darstellung eines Motors mit Ladeluft- und Abgassystem zur Verwendung im Rahmen eines Ausführungsbeispiels des erfindungsgemäßen Verfahrens.

Ein im ganzen mit 10 bezeichneter Motor für einen Kraftwagen ist im vorliegenden Beispiels als 8-Zylinder-V-Motor mit zwei Zylinderbänken 12, 14 ausgeführt. Jeder Zylinderbank 12. 14 ist ein Turbolader 16, 18 zugeordnet, der zur Ladeluftversorgung der jeweiligen Zylinderbank 12, 14 dient. Die beiden Turbolader 16, 18 können dabei auch Ladeluft in einen gemeinsamen Luftsammelbehälter fördern. Jeweilige Abgaskrümmer 20 leiten dabei das Abgas von den Zylinderbänken 12, 14 zu einem Turbinenrad 22 des jeweiligen Turboladers 16, 18. Das Abgas strömt dann über jeweilige Abgasleitungen 24 zu Abgaskatalysatoren 26.

Die vom Abgas angetriebenen Turbinenräder 22 treiben über Wellen 28 Verdichterräder 30 der Turbolader 16,18 an. Durch einen oder mehrere Luftfilter 32 angesaugte Umgebungsluft wird von den Verdichterrädern 30 verdichtet und einem Ladeluftkühler 34 zugeführt. Der Luftstrom kann dabei durch Drosselklappen 36 reguliert werden. Aus dem Ladeluftkühler 34 strömt die verdichtete und abgekühlte Luft über Leitungen 38 in jeweilige, den Zylinderbänken 12, 14 zugeordnete Saugrohre 40 und schließlich in die Zylinder der Zylinderbänke 12, 14.

Um den Ladedruck, also den Druck der von den Turboladern 16, 18 verdichteten Luft, zu überwachen, sind Drucksensoren 42, 44 vorgesehen. Auch die Ladelufttemperatur wird durch einen Temperatursensor 46, der in Strömungsrichtung der Ladeluft vor dem Ladeluftkühler angeordnet ist, überwacht.

Zur Einstellung des Ladedrucks in Abhängigkeit von der momentanen Leistungsabgabe des Motors 10 sind Bypassleitungen 50 vorgesehen, mittels welcher ein Teil des Abgasstromes an den Turbinenrädern 22 der Turbolader 16,18 vorbeigeleitet werden kann. Die durch die Bypassleitungen 50 zu leitende Abgasmenge wird durch sogenannte Wastegateventile 52 kontrolliert, die mittels Stelleinrichtungen 54 einstellbar sind. Je mehr Abgas über die Bypassleitungen 50 an den Turbinenrädern 22 vorbeigeleitet wird, desto geringer ist die Drehzahl der Turbinenräder 22 und damit auch der von den Verdichterrädern 30 erzeugte Ladedruck.

In bestimmten Situationen, beispielsweise bei einem Leck in einer der Luftleitungen 38, sinkt der Ladedruck ab. Um den gewünschten Druck aufrechtzuerhalten, muss daher die Drehzahl der Verdichterräder 30 erhöht werden. Das könnte insbesondere im Vollastbetrieb des Motors 10 zum Überschreiten einer Maximaldrehzahl der Turbolader 16, 18 und damit zu Schäden an den Turboladern 16, 18 führen. Um solches zu vermeiden, muss die Drehzahl der Turbolader 16, 18 überwacht werden. Dies erfolgt im vorliegenden Ausführungsbeispiel indirekt über die Messung der Temperatur der Ladeluft in Strömungsrichtung hinter den Verdichterrädern 30 durch die Temperatursensoren 46. Diese Temperatur ist gemäß der allgemeinen Gasgleichung direkt vom Ausmaß der Verdichtung der Ladeluft durch die Verdichterräder 30 und damit von der Drehzahl der Turbolader 16, 18 abhängig. Um weitere Einflussfaktoren auf die Temperatur der Ladeluft auszuschließen, wird eine Differenz der Messwerte der Temperatursensoren 46 der beiden Turbolader 16, 18 gebildet. Unterscheidet sich diese Differenz von Null oder überschreitet sie einen vorgegebenen Schwellenwert, so bedeutet dies, dass die Turbolader 16, 18 unterschiedliche Drehzahlen aufweisen.

Um Beschädigungen der Turbolader 16, 18 zu vermeiden, muss die Turboladerdrehzahl vermindert werden, wenn der Betrag der Temperaturdifferenz zwischen den Sensoren 46 einen vorgegebenen Schwellenwert überschreitet. Im einfachsten Fall werden hierzu die Wastegateventile 52 beider Turbolader 16, 18 geöffnet. Hierfür ist keine getrennte Steuerung der Stelleinrichtungen 54 notwendig. Selbstverständlich können die Turbolader 16, 18 auch getrennt angesteuert werden. Zweckmäßigerweise wird dann das Wastegateventil 52 desjenigen Turboladers, dessen zugeordneter Temperatursensor 46 die höhere Temperatur misst, weiter geöffnet, um die Drehzahl dieses Turboladers zu senken und die Drehzahlen der beiden Turbolader anzugleichen.

## Patentansprüche

1. Verfahren zum Betreiben eines Kraftwagens mit zwei Turboladern (16, 18), bei welchem für jeden Turbolader (16, 18) eine Temperatur eines Ladeluftstromes in Strömungsrichtung der Ladeluft hinter einem Verdichterrad (30) des jeweiligen Turboladers (16, 18) gemessen wird und eine Differenz der jeweiligen Temperaturen gebildet wird.

2. Verfahren nach Anspruch 1,
**dadurch gekennzeichnet, dass**
eine Drehzahl desjenigen Turboladers (16, 18) mit der höheren Temperatur reduziert wird, falls ein Betrag der Differenz einen vorgegebenen Schwellenwert überschreitet.

3. Verfahren nach Anspruch 1,
**dadurch gekennzeichnet, dass**
die Drehzahl beider Turbolader (16, 18) reduziert wird, falls ein Betrag der Differenz einen vorgegebenen Schwellenwert überschreitet.

4. Verfahren nach Anspruch 2 oder 3,
**dadurch gekennzeichnet, dass**
zur Verminderung der Drehzahl ein Öffnungsgrad eines Wastegateventils (52) des Turboladers (16, 18) erhöht wird.

5. Verfahren nach einem der Ansprüche 2 bis 4,
**dadurch gekennzeichnet, dass**
zur Verminderung der Drehzahl ein Anströmquerschnitt des Abgases an ein Turbinenrad (22) des Turboladers (16, 18) durch Verstellen wenigstens einer Leitschaufel erhöht wird.

6. Verfahren nach einem der Ansprüche 1 bis 5,
**dadurch gekennzeichnet, dass**
ein Warnsignal erzeugt wird, falls der Betrag der Differenz den vorgegebenen Schwellenwert überschreitet.

7. Verfahren nach einem der Ansprüche 1 bis 6,
**dadurch gekennzeichnet, dass**
der vorgegebenen Schwellenwert in Abhängigkeit von wenigstens einem weiteren Betriebsparameter des Kraftwagens gewählt wird.
